# EUROPEAN PATENT SPECIFICATION

(11) **EP 2 958 425 B1**
(45) Date of publication and mention of the grant of the patent: **02.01.2019**
(21) Application number: 14714344.0
(22) Date of filing: 14.02.2014
(51) Int. Cl.: A01K 27/00

(54) **RETRACTABLE LEASH**
EINZIEHBARE LEINE
LAISSE RÉTRACTABLE

(30) Priority: 19.02.2013 IT VR20130044
(43) Date of publication of application: 30.12.2015
(73) Proprietor: Ferplast SpA, 37060 Castelgomberto (VI) (IT)
(72) Inventor: VACCARI, Carlo, 36060 Castelgomberto (VI) (IT)
(74) Representative: Sandri, Sandro
(86) International application number: PCT/IB2014/058993
(87) International publication number: WO 2014/128602

(56) References cited:
- EP-A1- 0 093 445
- DE-U1-202013 100 163
- US-A- 5 887 550
- US-A1- 2012 137 978

## Description

### TECHNICAL FIELD

The present invention relates to a pet leash of the automatically retractable type fitted with a device to block the extension of the cord as required in order to allow the cord which is fitted on an automatic winder to extend in an adjustable way to a predetermined maximum distance.

Whereas hereinafter the cord can be of any type including the tape type, this invention refers more specifically to a leash that makes it possible to overcome the problem imposed by the current regulation whereby the owner of a dog must use a leash with a predetermined maximum length when walking the dog in urban areas and areas open to the public.

The retractable leash according to the invention is equipped with a device that makes it possible to use the leash in the same way as those currently present on the market, including the permanent block, but with the addition of a selector that works in different positions to allow partial blocking in urban areas at a predetermined maximum distance or to free the cord when outside urban areas where the maximum distance can increase beyond said predetermined maximum length.

This invention can be applied in the field of accessories for pets, in particular in the sector for retractable leashes of the type with cords of a variable length.

### BACKGROUND ART

It is known that leashes for pets, typically for dogs, are also made in the retractable form to allow variations in the distance between the animal and its owner and to allow absorption of the stresses and strains caused by the dog, permitting the dog to move away from its owner up to the maximum established distance, which is the maximum length of the cord completely unwound.

The problem that this mechanism wishes to resolve derives from the requirement of being able to keep, only in certain circumstances, the dog at a short distance from the owner.

This requirement may be necessary for example when walking on a pavement close to the road, in the centre of a city, in the presence of other people, particularly children, or where required by law.

In Italy for example, and this is currently the only country in Europe, a law has been passed by the Ministry of Work, Health and Social Policies whereby the owner of a dog must always use a leash whose length does not exceed a predetermined length when walking in urban areas and in areas open to the public.

It should be considered here that practically all retractable leashes are equipped with a permanent block allowing the length of the cord to be fixed at a specific distance. These leashes do not, however, allow effective control of the distance since they do not have any reference that allows the owner of the dog to stop the unwinding of the cord at a predetermined distance, for example 1.5 mt.

In addition, in the case of traditional retractable leashes that include a blocking device, when the leash is permanently blocked the cord is no longer kept taut by the internal spring, and when the dog moves closer to its owner the cord forms a loop on the ground and becomes dirty, or gets tangled around the dog's legs or is damaged by trailing on the ground.

The European patent EP0093445 attempted to overcome these problems, but this solution had the sole advantage of allowing the leash to be blocked at various distances, not just the predetermined one, with the disadvantage, however, of functioning only with tape and, above all, of not allowing integration with the traditional permanent block which must in any case be present on a modern leash.

Document US-A-5887550 discloses a retractable pet leash according to the preamble of claim 1.

### DESCRIPTION OF THE INVENTION

The present invention provides an automatically retractable pet leash, which is equipped with a device for automatic partial blocking of the cord at one (or more) predetermined distances, thus creating a condition which makes it possible to eliminate or at least reduce the drawbacks described above.

The present invention also provides an automatically retractable pet leash with a device for automatic partial blocking of the cord at a predetermined distance, which is both simple to make and truly effective.

This is achieved by an automatically retractable pet leash fitted with means for automatic partial blocking of the cord whose features are described in the characterising portion of claim 1.

The dependent claims of the solution proposed herein describe advantageous embodiments of the invention.

The main advantages of this solution concern first of all the fact that the mechanism according to the invention, applicable on retractable leashes, presents the advantage with respect to known solutions of allowing the dog, in certain areas, to move away from its owner up to a maximum predetermined distance according to regulations, at the same time guaranteeing, in less restricted areas, that the dog can move away up to the maximum length allowed by the completely unwound cord, for example normally 2, 3 or 5 mt.

This is achieved according to the invention by a fork-type system that is interposed between the pushbutton and the winding device, said fork acting in combination with a stop element such as an enlargement or a spherical element positioned at a predetermined distance along the cord, for example at 1.5 mt from the clip used to attach the leash to the dog's collar.

### DESCRIPTION OF THE DRAWINGS

Other features and advantages of the invention will become clear on reading the description given below of one embodiment, provided as a non-binding example, with the help of the accompanying drawings, in which:
- figure 1 is a diagram showing an open housing for the retractable leash according to the present invention with the partial length control mechanism in the released position;
- figure 2 shows a detail of the open casing of the previous figure;

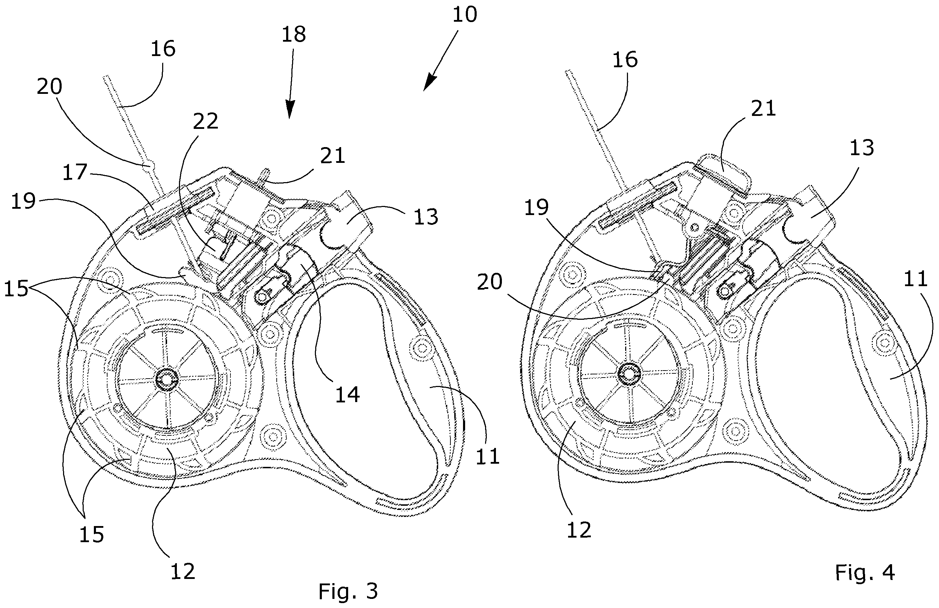

- figures 3 and 4 are schematic views showing, respectively, the cord in the released position with the enlargement being retracted and the partial blocking device during installation;

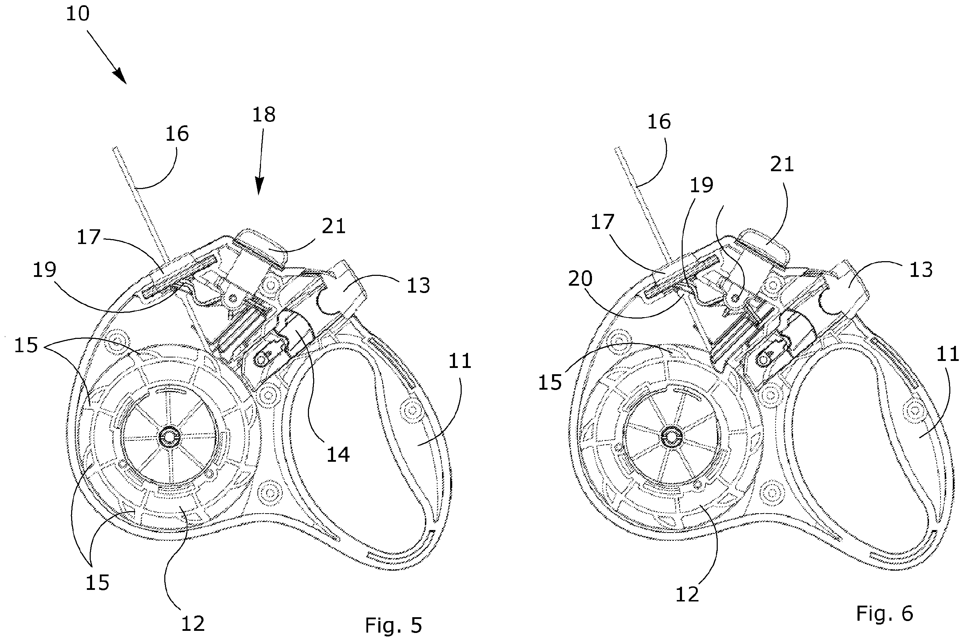

- figures 5 and 6 are schematic views of the winding device with the enlargement engaged and the blocked position and the winding wheel in the two pre-blocking and blocked positions;
- figure 7 is a detail of the winding device with the enlargement engaged and the blocked position and the winding wheel in the blocked position.

### DESCRIPTION OF A FORM OF EMBODIMENT OF THE INVENTION

The accompanying figures show a retractable leash according to the present invention substantially comprising a housing 10 or casing comprising a hand grip 11 and where inside the casing there is a toothed wheel winder 12 intercepted by a traditional brake mechanism according to the invention operated by a button 13.

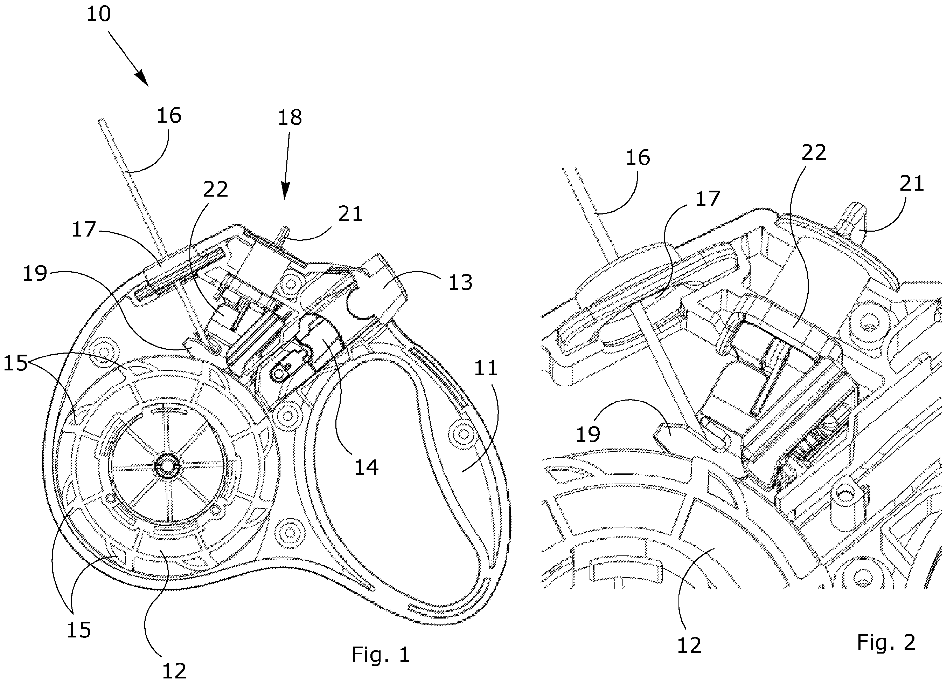

With reference first of all to figure 1, it can be noted that the pushbutton 13 acts according to traditional construction methods, that is to say with pressure exerted by the fingers pushing down a plunger 14 whose lower end is designed to enter the winding device between two of its teeth 15 positioned on the circumference.

The winding device 12 allows the winding and unwinding of a cord 16 which passes through an opening 17 in the front part of the casing of the leash.

A particular feature of the invention is due to the presence of a device, indicated overall by the reference number 18, that comprises a fork-type selector 19 that is interposed between the pushbutton and the winding device, said fork acting in combination with a stop element such as an enlargement 20 or a spherical element positioned at a predetermined distance along the cord, for example at 1.5 mt from the clip used to attach the leash to the dog's collar.

More specifically, in an intermediate zone between the pushbutton 13, the winding device 12 and the unit which dispenses the cord through the opening 17, there is a turn-key type selector 21 positioned to correspond with a support 22 that holds the fork 19 positioned in the zone through which the cord 16 passes, it being possible, by activating the selector 21, to move the fork from a retracted position to a position in which it interferes with the cord 16.

In fact, the turn-key selector causes the rotation of the fork, so that when it is in the interference position, it can be raised from the enlargement 20 in the cord which then pulls it outwards.

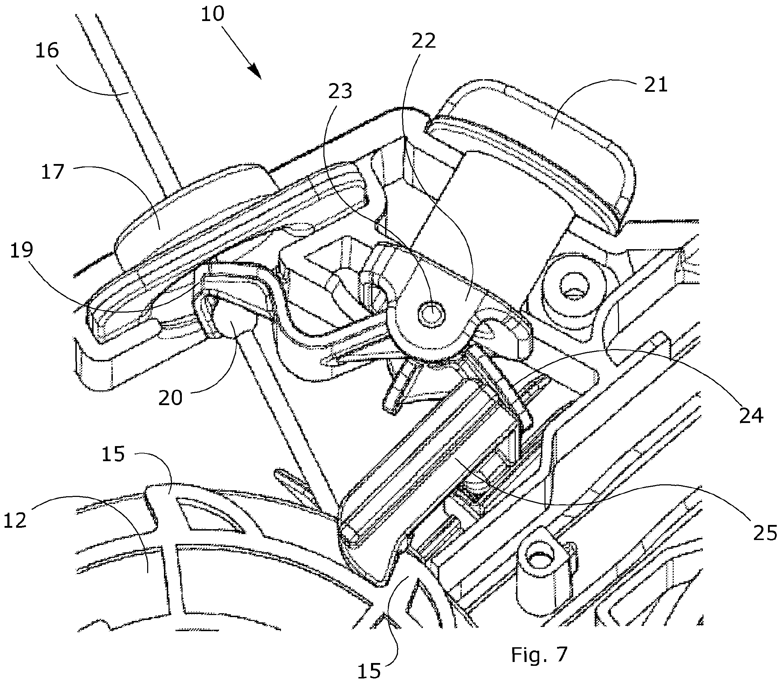

In turn, the fork 19, as can be seen in figure 7, is hinged on a pin 23 in order to form a sort of lever, the other end of which forms an appendix 24 designed to intercept a slide 25, shaped in such a way as to penetrate between two consecutive teeth 15 of the winding device 12.

The particular feature of this mechanism is that the fork 19 and the blocking slide element 25 are independent of each other and are kept in contact by a torsion spring, not visible since it is located inside the joint.

This allows the cord 16 to move forward a certain distance between the moment in which the enlargement meets the fork and the moment in which the slide 25 then penetrates between the teeth to block the winding device, thus preventing the slide from pushing forward while one of the teeth 15 is moving past, which could cause problems for the mechanism that could even break.

From an operational point of view, to allow the partial blocking of the cord at the partial predetermined distance from the enlargement 20, it is sufficient to retract the enlargement 20 upstream of the fork 19 and then rotate the selector 21 to allow the fork 19 to intervene. In this condition, when the cord 16 is taut, with the enlargement 20 previously retracted so that it is positioned upstream of the fork, the appendix 24 is pushed down and in turn moves the slide 25, causing the blocking of the winding device.

As can be seen, the blocking of the winding device is activated at an established distance from the position of the enlargement 20, a distance that can thus be set according to requirements and current regulations, for example so that the leash clip is 1.5 m from the winding device.

On the contrary, if used in an area without restrictions, the selector 21 can be kept in the released position, so that the cord, which can also be a tape, can slide freely up to its maximum length, which can be 3, 5 or 7 metres.

If the cord is a tape, the enlargement can be replaced by a separator which can be spherical, prismatic or any other appropriate shape.

The invention is described above with reference to a preferred embodiment. It is nevertheless clear that the invention is susceptible to numerous variations which lie within the scope of its disclosure, in the framework of technical equivalents.

## Claims

1. A retractable pet leash comprising a body (10) consisting of a casing including a handle (11) for gripping the leash with one hand, inside the casing there being a winding device (12) of the toothed wheel type, intercepted by a brake mechanism activated by means of a pushbutton (13) which pushes down a plunger (14) whose lower end is designed to enter the winding device between two of its teeth (15) positioned on the circumference, and in which said winding device (12) allows the winding and unwinding of a cord or tape (16) which passes through an opening (17) in the front part of the casing of the leash, said leash being **characterised in that** it comprises a device (18) having a fork (19) which is interposed between the pushbutton and the winding device, said fork acting in combination with a stop element such as an enlargement or knot (20) positioned at a predetermined distance along the cord (16) or tape, and **in that** said fork (19) is hinged on a pin (23) in order to form a lever, one end of which forms an appendix (24) co-operating with a slide element (25) shaped in such a way as to penetrate between two consecutive teeth (15) of the winding device (12).

2. A retractable pet leash according to claim 1, **characterised in that** in an intermediate zone between the pushbutton (13), the winding device (12) and an unit which dispenses the cord through the opening (17), there is a turn-key type selector (21) positioned close to a support (22) that holds said fork-type selector (19) positioned in the zone through which the cord (16) passes, said fork-type selector being movable, by activating said turn-key type selector (21), from a retracted position to a position in which it interferes with the cord (16).

3. A retractable pet leash according to any one of the preceding claims, **characterised in that** the fork (19) and the slide element (25) are independent of each other and are kept in contact by a torsion spring.

4. A retractable pet leash according to any one of the preceding claims, **characterised in that** the blocking point of the winding device is activated at an established distance from the position of the knot (20), a distance that can thus be set according to requirements and current regulations, for example so that the leash clip is 1.5 m from the winding device.

5. A retractable pet leash according to any one of the preceding claims, **characterised in that** if the cord is a tape, the enlargement can be replaced by a separator which can be spherical, prismatic or any other appropriate shape.

## Patentansprüche

1. Einziehbare Hundeleine, die einen Körper (10) umfasst, der aus einem Gehäuse einschließlich eines Handgriffs (11) zum Ergreifen der Leine mit einer Hand besteht, wobei es innerhalb des Gehäuses eine Wickelvorrichtung (12) vom Zahnradtyp gibt, die durch einen Bremsmechanismus abgefangen wird, der mittels eines Druckknopfs (13) aktiviert wird, welcher einen Kolben (14) herunterdrückt, dessen unteres Ende dafür ausgelegt ist, in die Wickelvorrichtung zwischen zwei seiner Zähne (15) einzudringen, die sich am Umfang befinden, und wobei die Wickelvorrichtung (12) das Aufwickeln und Abwickeln einer Schnur oder eines Bandes (16) ermöglicht, das durch eine Öffnung (17) im vorderen Teil des Gehäuses der Leine läuft, wobei die Leine **dadurch gekennzeichnet ist, dass** sie eine Vorrichtung (18) umfasst, die eine Gabel (19) hat, die zwischen dem Druckknopf und der Wickelvorrichtung angeordnet ist, wobei die Gabel in Kombination mit einem Stoppelement wirkt, wie zum Beispiel einer Vergrößerung oder einem Knoten (20), der in einem vorgegebenen Abstand entlang der Schnur (16) oder Bandes positioniert ist, und dadurch, dass die Gabel (19) gelenkig auf einem Stift (23) angeordnet ist, um einen Hebel zu bilden, dessen ein Ende einen Anhang (24) bildet, der mit einem Seitenelement (25) kooperiert, das so geformt ist, dass es zwischen zwei aufeinanderfolgenden Zähnen (15) der Wickelvorrichtung (12) eindringt.

2. Einziehbare Hundeleine nach Anspruch 1, **dadurch gekennzeichnet, dass** in einem Zwischenbereich zwischen dem Druckknopf (13), der Wickelvorrichtung (12) und einer Einheit, die die Schnur durch die Öffnung (17) ausgibt, ein fertiger Selektor (21) vorhanden ist, der dicht bei einer Stütze (22) positioniert ist, die den Selektor (19) vom Gabeltyp hält, der in dem Bereich positioniert ist, durch den die Schnur (16) läuft, wobei der Selektor vom Gabeltyp beweglich ist, in dem der Selektor (21) vom Gabeltyp aus einer zurückgezogenen Position in eine Position aktiviert wird, in der er in die Schnur (16) eingreift.

3. Einziehbare Hundeleine nach einem der vorherigen Ansprüche, **dadurch gekennzeichnet, dass** die Gabel (19) und das Seitenelement (25) unabhängig voneinander sind und in Kontakt durch eine Torsionsfeder gehalten werden.

4. Einziehbare Hundeleine nach einem der vorherigen Ansprüche, **dadurch gekennzeichnet, dass** der Blockpunkt der Wickelvorrichtung in einem festgelegten Abstand von der Position des Knotens (20) aktiviert wird, einem Abstand, der daher gemäß den Anforderungen und aktuellen Vorschriften eingestellt werden kann, zum Beispiel so, dass die Hundeleinenklammer 1,5 m von der Wickelvorrichtung entfernt ist.

5. Einziehbare Hundeleine nach einem der vorherigen Ansprüche, **dadurch gekennzeichnet, dass** wenn die Schnur ein Band ist, die Vergrößerung durch eine Trenneinrichtung ersetzt werden kann, die von einer sphärischen, prismatischen oder einer anderen geeigneten Form sein kann.

## Revendications

1. Laisse rétractable destinée aux animaux de compagnie, comprenant un corps (10) constitué d'un boîtier pourvu d'une poignée (11) permettant de saisir la laisse d'une main, un dispositif d'enroulement (12) du type à roue dentée étant à l'intérieur du boîtier, intercepté par un mécanisme de freinage activé au moyen d'un bouton-poussoir (13) qui pousse vers le bas un plongeur (14) dont l'extrémité inférieure est conçue pour entrer dans le dispositif d'enroulement entre deux de ses dents (15) positionnées sur la circonférence, et dans lequel ledit dispositif d'enroulement (12) permet l'enroulement et le déroulement d'une corde ou d'un ruban (16) passant à travers une ouverture (17) dans la partie avant du boîtier de la laisse, ladite laisse étant **caractérisée en ce qu'**elle comprend un dispositif (18) pourvu d'une fourche (19) qui est interposée entre le bouton-poussoir et le dispositif d'enroulement, ladite fourche agissant en combinaison avec un élément d'arrêt tel qu'un élargissement ou un noeud (20) positionné à une distance prédéterminée le long de la corde (16) ou du ruban, et **en ce que** ladite fourche (19) est articulée sur une tige (23) afin de former un levier, dont une extrémité forme un appendice (24) coopérant avec un élément coulissant (25) formé de manière à pénétrer entre deux dents consécutives (15) du dispositif d'enroulement (12).

2. Laisse rétractable destinée aux animaux de compagnie selon la revendication 1, **caractérisée en ce que**, dans une zone intermédiaire entre le bouton-poussoir (13), le dispositif d'enroulement (12) et une unité qui distribue la corde à travers l'ouverture (17), il y a un sélecteur de type à clé (21) positionné à proximité d'un support (22) qui maintient ledit sélecteur de type à fourche (19) positionné dans la zone traversée par la corde (16), ledit sélecteur de type à fourche étant mobile, par activation dudit sélecteur de type à clé (21), d'une position rétractée à une position dans laquelle il interfère avec la corde (16).

3. Laisse rétractable destinée aux animaux de compagnie selon l'une quelconque des revendications précédentes, **caractérisée en ce que** la fourche (19) et l'élément coulissant (25) sont indépendants l'un de l'autre et sont maintenus en contact par un ressort de torsion.

4. Laisse rétractable destinée aux animaux de compagnie selon l'une quelconque des revendications précédentes, **caractérisée en ce que** le point de blocage du dispositif d'enroulement est activé à une distance établie de la position du noeud (20), une distance qui peut ainsi être réglée selon des exigences et des réglementations en vigueur, par exemple pour que l'étrier de laisse se trouve à 1,5 m du dispositif d'enroulement.

5. Laisse rétractable destiné aux animaux de compagnie selon l'une quelconque des revendications précédentes, **caractérisée en ce que**, si la corde est un ruban, l'élargissement peut être remplacé par un séparateur qui peut être sphérique, prismatique ou de toute autre forme appropriée.
